# EUROPÄISCHE PATENTSCHRIFT

(11) **EP 3 545 538 B1**
(45) Veröffentlichungstag und Bekanntmachung des Hinweises auf die Patenterteilung: **19.05.2021**
(21) Anmeldenummer: 17780082.8
(22) Anmeldetag: 04.10.2017
(51) Int. Cl.: H01G 4/38, H01G 4/40

(54) **KONDENSATOR, INSBESONDERE ZWISCHENKREISKONDENSATOR FÜR EIN MEHRPHASENSYSTEM**
CAPACITOR, PARTICULARLY INTERMEDIATE CIRCUIT CAPACITOR FOR A MULTIPHASE SYSTEM
CONDENSATEUR, EN PARTICULIER CONDENSATEUR DE CIRCUIT INTERMÉDIAIRE POUR UN SYSTÈME MULTIPHASÉ

(30) Priorität: 24.11.2016 DE 102016223256
(43) Veröffentlichungstag der Anmeldung: 02.10.2019
(73) Patentinhaber: Robert Bosch GmbH, 70442 Stuttgart (DE)
(72) Erfinder: KESSLER, Martin, 73527 Schwaebisch Gmuend (DE)
(86) Internationale Anmeldenummer: PCT/EP2017/075144
(87) Internationale Veröffentlichungsnummer: WO 2018/095623

(56) Entgegenhaltungen:
- DE-A1-102013 216 941
- US-A- 5 388 028
- US-A1- 2012 139 483

## Beschreibung

### Stand der Technik

Die Erfindung betrifft einen Kondensator, insbesondere einen Zwischenkreiskondensator für ein Mehrphasensystem, mit den Merkmalen des Oberbegriffs des unabhängigen Anspruchs 1.

In der Leistungselektronik werden mehrere elektrische Netze über elektrische Kondensatoren in einem Zwischenkreis von Umrichtern energetisch auf einer gemeinsamen Gleichspannungsebene verkoppelt. Durch das wiederholte Auftreten von Schaltvorgängen treten frequenzabhängige hohe Verlustleistungen durch die wechselnden Ströme der Phasen auf. Es ist bekannt, dass sich durch flächige Stromführung und durch die bei entgegengesetzter Stromrichtung bewirkte magnetische Wechselwirkung zwischen den Stromlagen eine deutliche Reduzierung der aus der Verschaltung resultierenden Induktivität und damit deutlich reduzierte Verlustleistungen ergeben.

Elektrische Kondensatoren aus dem Stand der Technik sind beispielsweise in der US 2012/139483 A1 oder der US 5 388 028 A gezeigt.

### Offenbarung der Erfindung

Erfindungsgemäß wird ein Kondensator, insbesondere ein Zwischenkreiskondensator für ein Mehrphasensystem, mit einer ersten Spannungslage und einer zweiten Spannungslage vorgeschlagen. Die erste Spannungslage und die zweite Spannungslage bilden einen Überlappbereich, in dem die erste Spannungslage und die zweite Spannungslage parallel zueinander und durch einen Spalt voneinander beabstandet an einer Grundseite des Kondensators direkt übereinander angeordnet sind. Weiterhin umfasst der Kondensator wenigstens eine, zumindest ein Dielektrikum aufweisenden, Kondensatorstruktur, die auf einer von der zweiten Spannungslage abgewandten Oberseite der ersten Spannungslage angeordnet ist, wobei die erste Spannungslage mit einem ersten Anschluss der Kondensatorstruktur elektrisch leitend kontaktiert ist und die zweite Spannungslage mit einem zweiten Anschluss der Kondensatorstruktur mittels eines Kontaktierungselementes elektrisch leitend kontaktiert ist. Erfindungsgemäß weist die erste Spannungslage zumindest eine Ausnehmung auf, durch die das Kontaktierungselement hindurchgeführt ist.

### Vorteile der Erfindung

Gegenüber dem Stand der Technik weist der Kondensator mit den Merkmalen des unabhängigen Anspruchs den Vorteil auf, dass durch die parallele Führung der ersten Spannungslage und der zweiten Spannungslage in dem Überlappbereich eine sehr niederinduktive Verbindung entlang des Kondensators erreicht werden kann. Durch die planparallele Führung der Flächen an der Grundseite des Kondensators und die entgegengesetzte Stromrichtung werden die Strompfade in den Spannungslagen nah aneinander geführt. Die durch magnetische Kopplung der Magnetfelder nahe nebeneinander liegender Leiter verursachten Effekte, die zu großen Verlusten führen können, werden vorteilhaft durch die übereinander geführte Strompfade mit entgegengesetzter Stromrichtung ausgeglichen. Durch diese vorteilhaft niedriginduktive Aufbautechnik, bei der einerseits beispielsweise die erste Spannungslage an der Grundseite des Kondensators mit der zweiten Spannungslage überlappt und andererseits beispielsweise die Spannungslagen mit der Kondensatorstruktur oder den Kondensatorstrukturen überlappt, wird die Gesamtinduktivität des Kondensators stark verringert was zu vorteilhaft geringen Verlusten führt. Verlustbeiträge der ersten Spannungslage und der zweiten Spannungslage durch Skin-Effekte und Proximity-Effekte werden durch den erfindungsgemäßen Kondensator verringert. Skin-Effekte führen dazu, dass die Stromdichte im Inneren von durch Wechselstrom durchflossenen elektrischen Leitern geringer ist als in den äußeren Bereichen. Proximity-Effekte führen zu Stromeinschnürungen oder Stromverdrängungen zwischen eng beieinander liegenden Leitern bei Wechselströmen. So können mit der Reduzierung der parasitären Induktivität des Kondensators, beim Einsatz des Kondensators beispielsweise als Zwischenkreiskondensator, somit auch die Anforderungen an die schaltenden Halbleiterschalter vorteilhaft reduziert werden. Darüber hinaus wird die elektromagnetische Verträglichkeit des Aufbaus gegenüber anderen Bauteilen vorteilhaft verbessert.

Außerdem ist der erfindungsgemäße Kondensator vorteilhaft als Mehrphasenkondensator in Zwischenkreisen einsetzbar. So können beispielweise für 6-Phasensysteme alle Phasen an den erfindungsgemäßen Kondensator angeschlossen werden anstatt zwei 3-Phasenkondensatoren über eine Busbar zur verbinden, was schon bei sehr geringen Induktivitätswerten zu schwingfähigen CLC-Systemen führen kann, die bei jedem Schaltvorgang einer Inverterphase angeregt werden. Da bei dem erfindungsgemäßen Kondensator die Polarität aller Phasenanschlüsse beibehalten wird, können vorteilhaft alle Anschlüsse paarweise gleichartig ausgeführt werden.

Außerdem weist der Kondensator mit den Merkmalen des unabhängigen Anspruchs den Vorteil auf, dass die erste Spannungslage und die zweite Spannungslage des Kondensators, die an eine Grundseite des Kondensators direkt übereinander angeordnet sind, bei Auflage der Grundseite auf eine Kühlvorrichtung, wie beispielsweise einen Kühlkörper, vorteilhaft gekühlt werden können. Dies stellt eine besonders einfache Kühlung sowohl der ersten Spannungslage als auch der zweiten Spannungslage und der auf der Oberseite der ersten Spannungslage angeordneten Kondensatorstruktur da. Durch die gleichzeitige Kühlung der ersten Spannungslage und der zweiten Spannungslage wird so vorteilhaft der gesamte Entwärmungsaufwand für den Kondensator reduziert. Weiterhin kann so vorteilhaft beispielsweise in der ersten Spannungslage oder der zweiten Spannungslage durch Schaltprozesse entstehende Verlustwärme beispielsweise auch vorteilhaft über eine an der Grundseite des Kondensators angeordnete Kühlvorrichtung abgeführt werden. Durch eine derartige Kühlung des Kondensators an der Grundseite des Kondensators kann somit vorteilhaft die in die beispielsweise wärmeempfindliche Kondensatorstruktur eingebrachte Wärme vorteilhaft reduziert werden, so dass beispielsweise auch wärmeempfindliche Kondensatorstrukturen verwendet werden können.

Weitere vorteilhafte Ausgestaltungen und Weiterbildungen der Erfindungen werden durch die in den Unteransprüchen angegebenen Merkmale ermöglicht.

Erfindungsgemäß ist außer der wenigsten einen Kondensatorstruktur wenigstens eine weitere Kondensatorstruktur mit einem weiteren ersten Anschluss und einem weiteren zweiten Anschluss vorgesehen, die auf der Oberseite der ersten Spannungslage angeordnet ist. Dabei ist der weitere erste Anschluss der weiteren Kondensatorstruktur mit der ersten Spannungslage elektrisch leitend kontaktiert und der weitere zweite Anschluss der weiteren Kondensatorstruktur ist mittels des Kontaktierungselements mit der zweiten Spannungslage elektrisch leitend kontaktiert, wobei ein Seitenbereich des Kontaktierungselements zumindest teilweise zwischen der Kondensatorstruktur und der weiteren Kondensatorstruktur angeordnet ist.

Besonders vorteilhaft ist der Seitenbereich des Kontaktierungselementes flächig ausgebildet. Somit können Seitenbereiche des Kontaktierungselements beispielsweise vorteilhaft als Trennwände zwischen mehreren Kondensatorstrukturen dienen und Wärme kann über flächige Seitenbereiche des Kontaktierungselements vorteilhaft an die zweite Spannungslage und somit die Grundseite des Kondensators abgeleitet werden. Durch flächige Seitenbereiche des Kontaktierungselementes kann das Kontaktierungselement in einem vorteilhaft großem Bereich mit der Kondensatorstruktur oder den Kondensatorstrukturen überlappen, wodurch die Gesamtinduktivität und die Verluste im Kondensator vorteilhaft weiter verringert werden können.

In einem vorteilhaften Ausführungsbeispiel ist der Seitenbereich des Kontaktierungselementes im Wesentlichen senkrecht zu der ersten Spannungslage und der zweiten Spannungslage angeordnet. Somit können vorteilhaft gute Aufnahmen für Kondensatorstrukturen gebildet sein, die ein sicheres Anordnen der Kondensatorstrukturen in dem Kondensator bei kompakter Bauweise des Kondensators ermöglichen.

Erfindungsgemäß ist an dem Kontaktierungselement ein flächiger Deckbereich ausgebildet, wobei die Kondensatorstruktur zwischen dem flächigen Deckbereich und der ersten Spannungslage angeordnet ist. Durch einen flächigen Deckbereich des Kontaktierungselements, der beispielsweise auch parallel zu der ersten Spannungslage ausgebildet sein kann, ergibt sich der Vorteil, dass die Gesamtinduktivität des Kondensators vorteilhaft weiter reduziert werden und somit Verluste minimiert werden können. Außerdem können die Kondensatorstrukturen vorteilhaft geschützt sein.

In einem vorteilhaften Ausführungsbeispiel überlappt der flächige Deckbereich des Kontaktierungselements mit der ersten Spannungslage und/oder mit der zweiten Spannungslage. Somit kann die Gesamtinduktivität des Kondensators vorteilhaft weiter reduziert werden.

Erfindungsgemäß ist an dem Seitenbereich wenigstens ein Verbindungselement ausgebildet, das durch die Ausnehmung hindurchragt, wobei das Verbindungselement eine geringere Breite des Verbindungselements als eine Breite des Seitenbereichs aufweist. Somit kann die Ausnehmung in der ersten Spannungslage vorteilhaft klein gestaltet werden und somit die Flächenausdehnung der ersten Spannungslage und somit der Überlappbereich trotz der Ausnehmung vorteilhaft großflächig sein. Dies führt zu einem vorteilhaft großen Überlappungsbereich der ersten Spannungslage mit der zweiten Spannungslage und somit zu einer vorteilhaft reduzierten Induktivität des Kondensators.

Vorteilhaft ist an dem Seitenbereich eine Mehrzahl an Verbindungselementen vorgesehen, wobei jeweils ein Verbindungselement durch jeweils eine Ausnehmung der ersten Spannungslage hindurchragt. Durch eine Mehrzahl an Verbindungselementen, die beispielsweise durch mehrere Ausnehmungen hindurchragen, kann eine stabile Verbindung des Kontaktierungselements mit der zweiten Spannungslage hergestellt sein.

Es erweist sich als Vorteil, wenn das wenigstens eine Verbindungselement stiftförmig ausgebildet ist und in wenigstens eine Öffnung in der zweiten Spannungslage eingesteckt ist und/oder mit der zweiten Spannungslage verschweißt ist. Auf diese Weise kann das Kontaktierungselement durch das Verbindungselement vorteilhaft einfach an der zweiten Spannungslage montiert werden und einfach und stabil an dieser befestigt sein.

Umfasst das Kontaktierungselement einen weiteren Seitenbereich, wobei der Seitenbereich und der weitere Seitenbereich auf gegenüberliegenden Seiten der Kondensatorstruktur angeordnet sind, so ergibt sich der Vorteil, dass auf beiden gegenüberliegenden Seiten der Kondensatorstruktur ein Seitenbereich vorhanden ist, was als stabile und kompakte Aufnahme für die Kondensatorstruktur dienen kann. Die Kondensatorstruktur kann beispielsweise bei der Fertigung vorteilhaft einfach zwischen die beiden Seitenbereiche des Kontaktierungselements eingeschoben werden. Die Kondensatorstruktur kann so in der Aufnahme eingesetzt sein und auf diese Weise vorteilhaft justiert und geschützt sein. Somit ist der Kondensator vorteilhaft kompakt und bietet eine vorteilhafte Aufnahme für eine Vielzahl an Standard-Kondensatorstrukturen und erweist sich deshalb als besonders vorteilhaft bei Anwendungen, die eine Verbindung mehrerer Kondensatorstrukturen erfordern. Weiterhin kann in Kondensatorstrukturen entstehende Wärme vorteilhaft über die beiden gegenüberliegenden Seiten und die an den beiden gegenüberliegenden Seiten angeordneten Seitenbereiche des Kontaktierungselements abgeleitet werden.

Es erweist sich als Vorteil, wenn der Kondensator wenigstens einen ersten Polanschluss zur Kontaktierung der ersten Spannungslage und wenigstens einen zweiten Polanschluss zur Kontaktierung der zweiten Spannungslage umfasst, wobei sich der wenigstens eine erste Polanschluss in seitlicher Fortsetzung der ersten Spannungslage und parallel dazu der wenigstens eine zweite Polanschluss in seitlicher Fortsetzung der zweiten Spannungslage über den Überlappbereich hinaus erstrecken und dergestalt wenigstens ein an der Grundseite des Kondensators abstehendes Kontaktierungsfahnenpaar bilden. Durch ein derartiges Kontaktierungsfahnenpaar können die Polanschlüsse besonders kostengünstig und einfach beispielsweise auch einteilig mit der zweiten Flächenelektrode bzw. der ersten Spannungslage ausgebildet sein.

Weiterhin erweist es sich als Vorteil, wenn die erste Spannungslage im Bereich der Ausnehmung das Kontaktierungselement vollständig umlaufend umgibt.

### Kurze Beschreibung der Zeichnungen

Ausführungsbeispiele der Erfindung sind in der Zeichnung dargestellt und werden in der nachfolgenden Beschreibung näher erläutert. Es zeigen
Fig. 1 zeigt eine erste Ansicht einer schematischen Darstellung eines Ausführungsbeispiels des erfindungsgemäßen Kondensators
Fig. 2 zeigt eine zweite Ansicht einer schematischen Darstellung des Ausführungsbeispiels des erfindungsgemäßen Kondensators aus Fig. 1,

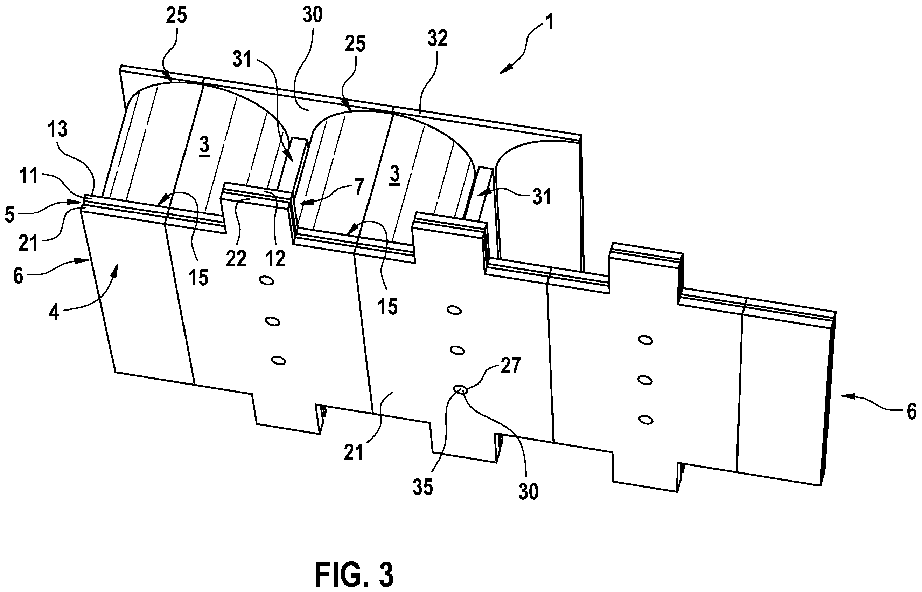

Fig. 3 zeigt eine dritte Ansicht einer schematischen Darstellung des Ausführungsbeispiels des erfindungsgemäßen Kondensators aus Fig. 1.

### Ausführungsformen der Erfindung

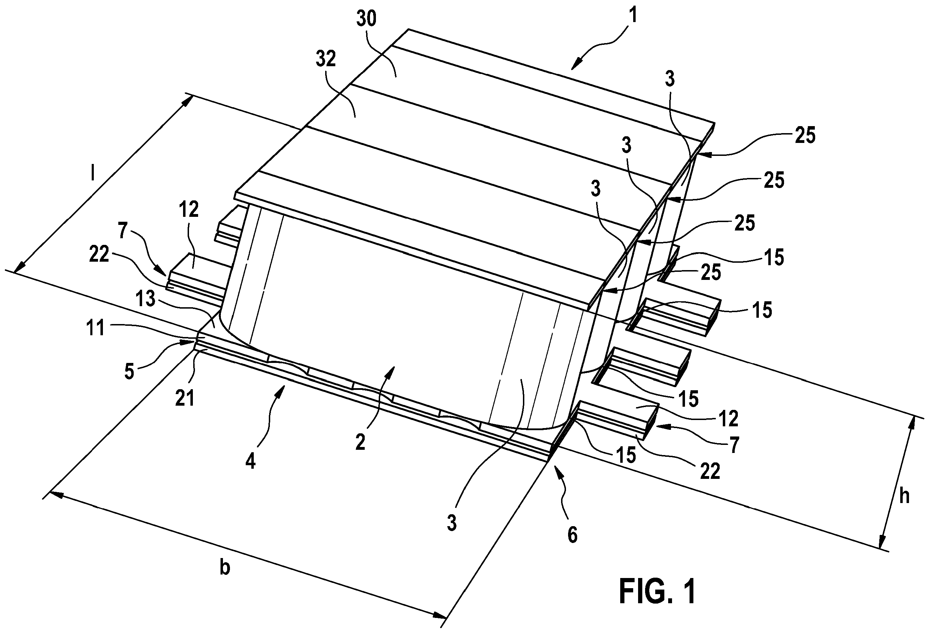

Fig. 1 zeigt eine schematische Darstellung eines Ausführungsbeispiels des erfindungsgemäßen Kondensators 1. Der Kondensator 1 umfasst eine erste Spannungslage 11 und eine zweiten Spannungslage 21. Die erste Spannungslage 11 und die zweite Spannungslage 21 bilden einen Überlappbereich 4, in dem die erste Spannungslage 11 und die zweite Spannungslage 21 parallel zueinander und durch einen Spalt 5 voneinander beabstandet an einer Grundseite 6 des Kondensators 1 direkt übereinander angeordnet sind. Die Spannungslagen 11,21 sind aus elektrisch leitendem Material wie beispielsweise Metall, wie beispielsweise Kupfer, gefertigt. Die Spannungslagen 11, 21 können flächig ausgebildet und beispielsweise aus Blechen gefertigt sein. Die erste Spannungslage 11 und die zweite Spannungslage 21 können, wie in diesem Ausführungsbeispiel, im Wesentlichen, d.h. abgesehen von den in der ersten Spannungslage 11 vorgesehenen Ausnehmungen 14 die gleiche Flächenausdehnung aufweisen. So kann eine optimierte Führung der Strompfade übereinander gewährleistet werden und die Gesamtinduktivität des Kondensators 1 vorteilhaft verringert werden und die elektromagnetische Verträglichkeit verbessert werden. Die erste Spannungslage 11 weist eine Oberseite 13 auf, die von der zweiten Spannungslage 21 abgewandt ist.

Im Kontext der vorliegenden Anmeldung wird unter einem Objekt die erste Spannungslage 11, die zweite Spannungslage 21 oder ein Polanschluss 12, 22 verstanden. Ist ein erstes Objekt teilweise direkt unterhalb oder teilweise direkt oberhalb eines zweiten Objektes angeordnet oder sind das erste Objekt und das zweite Objekt direkt übereinander angeordnet, so wird im Kontext der vorliegenden Anmeldung darunter verstanden, dass das erste Objekt und das zweite Objekt relativ zueinander derart angeordnet sind, dass eine senkrechte Projektion des ersten Objekts auf eine zum zweiten Objekt planparallel angeordnete Projektionsebene und eine senkrechte Projektion des zweiten Objekts auf die Projektionsebene zumindest eine Schnittmenge aufweisen.

Der Kondensator 1 umfasst in diesem Ausführungsbeispiel weiterhin vier, jeweils wenigstens ein Dielektrikum 2 aufweisende, Kondensatorstrukturen 3.
Unter einer Kondensatorstruktur 3 wird im Kontext der vorliegenden Anmeldung eine Struktur verstanden, die zusammen mit der ersten Spannungslage 11 und der zweiten Spannungslage 21 einen Kondensator bilden kann oder die selbst einen Kondensator bildet. Jede der Kondensatorstrukturen 3 weist wenigstens einen ersten Anschluss 15 und wenigstens einen zweiten Anschluss 25 auf. Die Kondensatorstrukturen 3 können mittels der Anschlüsse 15, 25 elektrisch kontaktiert werden. In diesem Ausführungsbeispiel ist jede der Kondensatorstrukturen 3 über den jeweils ersten Anschluss mit der ersten Spannungslage 11 elektrisch leitend kontaktiert. Der zweite Anschluss 25 jeder Kondensatorstruktur 3 ist mittels eines Kontaktierungselements 30 elektrisch leitend mit der zweiten Spannungslage 21 kontaktiert. Die Kondensatorstruktur 3 kann beispielsweise ein Dielektrikum 2 sein, so dass die erste Spannungslage 10 zusammen mit dem Kontaktierungselement 30 und dem Dielektrikum 2 einen Kondensator bilden kann. Die Kondensatorstruktur 3 kann aber auch aus einem oder mehreren Kondensatoren bestehen, die auf der Oberseite 13 der ersten Spannungslage 11 angeordnet sind und je nach Verwendungszweck parallel oder in Reihe geschaltet sein können. Dabei können als Kondensatoren verschiedene Kondensator-Technologien wie beispielsweise Stack-, Rundwickel- oder Flachwickel-Kondensatoren eingesetzt werden. Beispielsweise kann eine Kondensatorstruktur 3 und eine weitere Kondensatorstruktur 3, die ebenfalls von dem Kondensator 1 umfasst wird, die gleiche Bauform aufweisen. In dem in Figur 1 gezeigten Ausführungsbeispiel sind alle Kondensatorstruktur 3 baugleich ausgeführt, d.h. der Kondensator 1 umfasst in diesem Ausführungsbeispiel vier baugleiche Kondensatorstrukturen 3.

Die Kondensatorstrukturen 3 sind in diesem Ausführungsbeispiel nebeneinander angeordnet. Die Kondensatorstrukturen 3 können aber beispielsweise auch hintereinander und/oder übereinander und/oder nebeneinander angeordnet sein. Es kann eine beliebige Anzahl an Kondensatorstrukturen 3 für den Kondensator 1 vorgesehen sein. Die Gesamtanordnung der Kondensatorstrukturen 3 weist dabei eine Länge l eine Breite b und eine Höhe h auf. Die Höhe h wird dabei senkrecht zu der ersten Spannungslage 11 gemessen, die Breite b und die Länge l werden hingegen parallel zu der ersten Spannungslage 11 gemessen. In diesem Ausführungsbeispiel ist die Höhe h der Kondensatorstrukturen 3 kleiner als die Breite b der Kondensatorstrukturen 3. Die Höhe h der Kondensatorstrukturen 3 ist kleiner als die Länge l Kondensatorstrukturen 3. In diesem Ausführungsbeispiel ergibt sich somit insgesamt ein flacher Kondensator 1. Wird der Kondensator 1 an der Grundseite 6 beispielsweise auf einem Kühlkörper angeordnet, so kann Wärme aus der ersten Spannungslage 11 und aus der zweiten Spannungslage 21 über eine vorteilhaft große Fläche and den Kühlkörper abgeleitet werden.

Die erste Spannungslage 11 erstreckt sich beispielsweise über die komplette Länge I der Kondensatorstrukturen 3 und über die komplette Breite b der Kondensatorstrukturen 3. Die zweite Spannungslage 21 erstreckt sich beispielsweise über die komplette Länge I der Kondensatorstrukturen 3 und über die komplette Breite b der Kondensatorstrukturen 3. Die Spannungslagen 11, 21 können beispielsweise auch mehrlagig ausgebildet sein. In den Spannungslagen 11, 21 können beispielsweise auch in den Figuren nicht dargestellte Aussparungen ausgebildet sein.

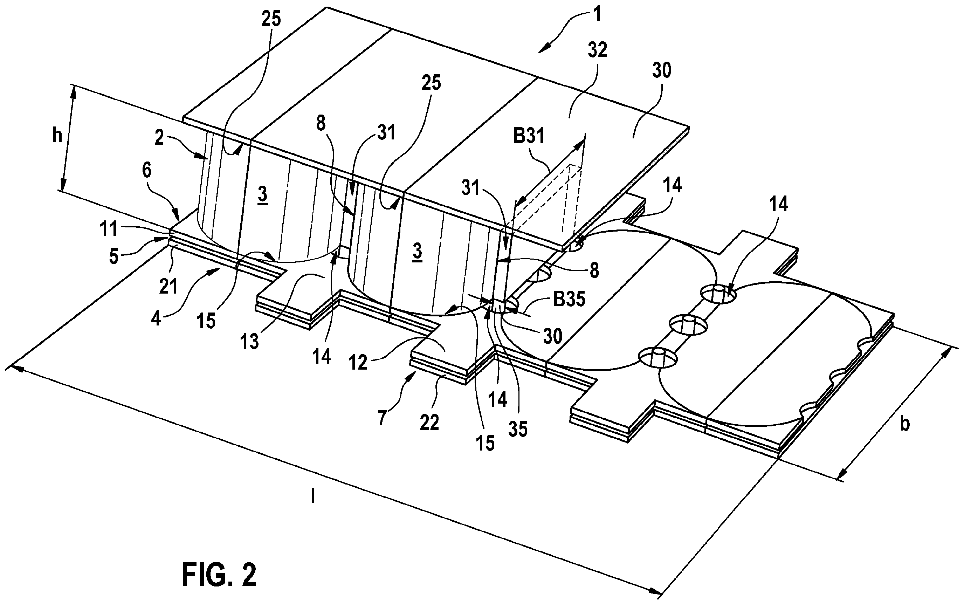

Die zweite Spannungslage 21 ist in diesem Ausführungsbeispiel mit den zweiten Anschlüssen 25 der Kondensatorstruktur 3 mittels eines Kontaktierungselementes 30 elektrisch leitend kontaktiert. Wie in Figur 2 anhand eines Schnittes durch das Ausführungsbeispiel dargestellt, weist die erste Spannungslage 11 des Kondensators 1 Ausnehmungen 14 auf. Das Kontaktierungselement 30 ist zur elektrischen Kontaktierung der zweiten Spannungslage 21 durch die Ausnehmung 14 hindurchgeführt. Das Kontaktierungselement 30 ist von der zweiten Spannungslage 21 zu dem zweiten Anschluss 25 der Kondensatorstruktur 3 durch die Ausnehmung 14 der ersten Spannungslage 11 hindurchgeführt. In den Bereichen der Ausnehmungen 14 umgibt die erste Spannungslage 11 das Kontaktierungselement 30 vollständig umlaufend.

Das Kontaktierungselement 30 weist in diesem Ausführungsbeispiel Seitenbereiche 31 auf. Ein Seitenbereich 31 des Kontaktierungselements 30 ist in diesem Ausführungsbeispiel zwischen einer Kondensatorstruktur 3 einen weiteren Kondensatorstruktur 3 angeordnet. In diesem Ausführungsbeispiel sind die Seitenbereiche 31 des Kontaktierungselements 30 flächig ausgebildet. Die Seitenbereiche 31 des Kontaktierungselements 30 bilden in diesem Ausführungsbeispiel somit Trennwände zwischen den einzelnen Kondensatorstrukturen 3. Ein Seitenbereich 31 des Kontaktierungselement 30 und ein weiterer Seitenbereich 31 des Kontaktierungselement 30 sind in diesem Ausführungsbeispiel auf gegenüberliegenden Seiten 8 der Kondensatorstruktur 3 angeordnet. Der Seitenbereich 31 des Kontaktierungselement 30 und der weitere Seitenbereich 31 des Kontaktierungselement 30, die auf gegenüberliegenden Seiten 8 der Kondensatorstruktur 3 angeordnet sind, bilden somit in diesem Ausführungsbeispiel zusammen mit dem Deckbereich 32 des Kontaktierungselement 30 und der ersten Spannungslage 11 eine Aufnahme für eine zwischen dem Seitenbereich 31 und dem weiteren Seitenbereich 31 angeordnete Kondensatorstruktur 3. In diesem Ausführungsbeispiel sind die Seitenbereiche 31 des Kontaktierungselements 30 im Wesentlichen senkrecht zu der ersten Spannungslage 11 und der zweiten Spannungslage 21 angeordnet. In anderen Worten stehen in diesem Ausführungsbeispiel die flächigen Seitenbereiche 31 des Kontaktierungselements 30 im Wesentlichen senkrecht auf der ersten Spannungslage 11 und auf der zweiten Spannungslage 21.

Weiterhin ist in diesem Ausführungsbeispiel an dem Kontaktierungselement 30 ein flächiger Deckbereich 32 ausgebildet. Die Kondensatorstrukturen 3 sind dabei zwischen dem flächigen Deckbereich 32 und der ersten Spannungslage 11 angeordnet. Der flächige Deckbereich 32 liegt somit der ersten Spannungslage 11 gegenüber und die Kondensatorstrukturen 3 sind in einem Zwischenraum zwischen der ersten Spannungslage 11 und dem Deckbereich 32 angeordnet. Der flächige Deckbereich 32 ist in diesem Ausführungsbeispiel parallel zu der ersten Spannungslage 11 angeordnet. Die erste Spannungslage 11 bildet in diesem Ausführungsbeispiel zusammen mit den Seitenbereich 31 des Kontaktierungselement 30 und dem Deckbereich 32 des Kontaktierungselement 30 sozusagen Aufnahmen für die Kondensatorstrukturen 3. In diesem Ausführungsbeispiel überlappt der flächige Deckbereich 32 des Kontaktierungselements 30 mit der ersten Spannungslage 11 und mit der zweiten Spannungslage 21.

Der flächige Deckbereich 32 und die erste Spannungslage 11 können, wie in diesem Ausführungsbeispiel, im Wesentlichen, d.h. abgesehen von den in der ersten Spannungslage 11 vorgesehenen Ausnehmungen 14 oder in dem Deckbereich vorgesehenen Ausnehmungen die gleiche Flächenausdehnung aufweisen. So kann eine optimierte Führung der Strompfade übereinander gewährleistet werden und die Gesamtinduktivität des Kondensators 1 vorteilhaft verringert werden und die elektromagnetische Verträglichkeit verbessert werden.

An den Seitenbereich 31 des Kontaktierungselements 30 sind beispielsweise Verbindungselemente 35 ausgebildet, die durch die Ausnehmungen 14 hindurchragen. Dabei weisen in diesem Ausführungsbeispiel die Verbindungselemente 35 eine geringere Breite B35 des Verbindungelements 35 als eine Breite B31 des Seitenbereichs 31 auf. Die Breite B31 des Seitenbereichs 31 und die Breite B 35 des Verbindungselements 35 werden parallel zur ersten Spannungslage 11 entlang der flächigen Erstreckung des Seitenbereichs 31 gemessen. So sind in diesem Ausführungsbeispiel an den flächig ausgebildeten Seitenbereichen 31 jeweils mehrere, in diesem Ausführungsbeispiel jeweils drei, Verbindungselemente 35 ausgebildet. Die Verbindungselemente 35 sind beispielsweise in seitlicher Erstreckung der Seitenbereiche 31 ausgebildet. Zu jedem der Verbindungselemente 35 des Kontaktierungselements 30 ist in diesem Ausführungsbeispiel eine Ausnehmung 14 in der ersten Spannungslage 11 vorgesehen. So ist in diesem Ausführungsbeispiel jedes einzelne Verbindungselement 35 durch eine einzige Ausnehmung 14 in der ersten Spannungslage 11 hindurchgeführt und die erste Spannungslage 11 umgibt in jedem Bereich einer Ausnehmung 14 ein Verbindungselement 35 vollständig umlaufend. Die Ausnehmungen 14 können beispielsweise, wie in diesem Ausführungsbeispiel komplementär zu den Verbindungselement 35 ausgeführt sein. Die Verbindungselemente 35 sind durch die Ausnehmungen 14 der ersten Spannungslage 11 hindurchgeführt ohne in Kontakt mit der ersten Spannungslage 11 zu sein. Die Verbindungselemente 35 sind gegenüber der ersten Spannungslage 11 elektrisch leitend isoliert. Die Verbindungselemente 35 stellen eine elektrisch leitende Verbindung von den Seitenbereichen 31 des Kontaktierungselements 30 zu der zweiten Spannungslage 21 her. Die Verbindungselemente 35 sind beispielsweise stiftförmige ausgebildet. So können die Verbindungselemente 35 beispielsweise in an der zweiten Spannungslage 21 ausgebildeten Öffnungen 27 eingesteckt sein und dort beispielsweise auch mit der zweiten Spannungslage 21 verschweißt sein.

Das Kontaktierungselement 30 ist in diesem Ausführungsbeispiel somit einteilig ausgebildet, und umfasst den Deckbereich 32, die Seitenbereiche 31 und die Verbindungselemente 35. Das Kontaktierungselement 30 ist aus dem elektrisch leitfähigen Material, beispielsweise einem Metall, wie beispielsweise Kupfer, gefertigt.

Weiterhin umfasst der Kondensator 1 wenigstens einen ersten Polanschluss 12 zur elektrischen Kontaktierung der ersten Spannungslage 11 und wenigstens einen zweiten Polanschluss 22 zur elektrischen Kontaktierung der zweiten Spannungslage 21. Der erste Polanschluss 12 ist beispielsweise einstückig mit der ersten Spannungslage 11 ausgebildet. Der zweite Polanschluss 22 ist beispielsweise einstückig mit der zweiten Spannungslage 21 ausgebildet. So erstreckt sich in diesem Ausführungsbeispiel, wie in Fig. 1 dargestellt, der wenigstens eine erste Polanschluss 12 in seitlicher Fortsetzung der ersten Spannungslage 11. In diesem Ausführungsbeispiel erstreckt sich der zweite Polanschluss 22 in seitlicher Fortsetzung der zweiten Spannungslage 21. Der erste Polanschluss 12 und der zweite Polanschluss 22 bilden in diesem Ausführungsbeispiel ein an der Grundseite 6 des Kondensators 1 abstehendes Kontaktierungsfahnenpaar 7. Dabei ist in diesem Ausführungsbeispiel der erste Polanschluss 12 in einer Erstreckungsebene der ersten Spannungslage 11 ausgebildet und der zweite Polanschluss 22 ist in einer Erstreckungsebene der zweiten Spannungslage 21 ausgebildet. Wie in den Figuren dargestellt, sind in diesem Ausführungsbeispiel sechs gleichartige erste Polanschlüsse 12 und sechs gleichartige zweite Polanschlüsse 22 vorgesehen. Die ersten Polanschlüsse 12 und die zweiten Polanschlüsse 22 bilden dabei beispielsweise jeweils paarweise ein Kontaktierungsfahnenpaar 7. In dem in dieser Anmeldung beschriebenen Ausführungsbeispiel weist der Kondensator 1 sechs Kontaktierungsfahnenpaare 7 auf. Darüber hinaus kann aber auch eine andere Anzahl an Kontaktierungsfahnenpaaren 7 ausgebildet sein und die Kontaktierungsfahnenpaare 7 können an anderen Stellen des Kondensators 1 angeordnet sein. Die Gesamtzahl der Polanschlüsse direkt beispielsweise ein Vielfaches von drei, fünf oder sechs. Der erste Polanschluss 12 und der wenigstens eine zweite Polanschluss 22 können, wie in diesem Ausführungsbeispiel, die gleiche Flächenausdehnung aufweisen. So kann eine optimierte Führung der Strompfade übereinander bis zu den Polanschlüssen 12, 22 gewährleistet, die Gesamtinduktivität des Kondensators 1 wird verringert und die elektromagnetische Verträglichkeit verbessert. In diesem Ausführungsbeispiel ist der erste Polanschluss 12 zumindest teilweise direkt oberhalb oder zumindest teilweise direkt unterhalb des wenigstens einen zweiten Polanschlusses 22 angeordnet. Der erste Polanschluss 12 kann aber auch beispielsweise seitlich versetzt zum zweiten Polanschluss 22 angeordnet sein.

In dem Überlappbereich 4 können in der zweiten Spannungslage 21 beispielsweise auch in den Figuren nicht dargestellte Ausnehmungen oder Fenster vorgesehen sein, durch die die erste Spannungslage 11 zugänglich ist und durch die hindurch die erste Spannungslage 11 beispielsweise mit den Kondensatorstrukturen 3 verbunden, beispielsweise verschweißt, werden kann.

Die erste Spannungslage 11, die zweite Spannungslage 21 und das Kontaktierungselement 30 sind beispielsweise alle aus dem gleichen Material, beispielsweise aus dem gleichen Metall gefertigt. Die zweite Spannungslage 21 ist mit dem Kontaktierungselement 30 elektrisch leitend verbunden und von der ersten Spannungslage 11 elektrisch isoliert. Beispielsweise kann der Kondensator 1 vergossen sein, so das in dem Spalt 5 und in anderen Zwischenräumen zwischen der ersten Spannungslage 21 und der zweiten Spannungslage 22 mit dem Kontaktierungsteil 30 eine Isolationsschicht aus Vergussmasse angeordnet ist. Die Spannungslagen 11, 21 und der Deckbereich 32 des Kontaktierungselements 30 sind in diesem Ausführungsbeispiel beispielhaft plattenartig ausgebildet. Grundsätzlich kommen für die Spannungslagen 11, 21 den Deckbereich 32 des Kontaktierungselements 30 aber auch zumindest leichte Abweichungen von Plattenform in Betracht.

In dem Kondensator 1 kann Strom von einem ersten Polanschluss 12 über die erste Spannungslage 11 und den ersten Anschluss 1 zur Kondensatorstruktur 3 fließen oder Strom kann umgekehrt von der Kondensatorstruktur 3 über den ersten Anschluss 1 und die erste Spannungslage 11 zum ersten Polanschluss 12 fließen. Gleichzeitig kann in dem Kondensator 1 Strom beispielsweise vom zweiten Polanschluss 22 über die zweite Spannungslage 21 über das Kontaktierungselement 30 über den zweiten Anschluss 25 zur Kondensatorstruktur 3 fließen oder Strom kann in der umgekehrten Richtung von der Kondensatorstruktur 3 über den zweiten Anschluss 25, das Kontaktierungselement 30 und die zweite Spannungslage 21 zum zweiten Polanschluss 22 fließen.

Selbstverständlich sind auch weitere Ausführungsbeispiele und Mischformen der dargestellten Ausführungsbeispiele möglich.

## Patentansprüche

1. Kondensator (1), insbesondere Zwischenkreiskondensator für ein Mehrphasensystem, mit einer ersten Spannungslage (11) und einer zweiten Spannungslage (21),
wobei die erste Spannungslage (11) und die zweite Spannungslage (21) einen Überlappbereich (4) bilden, in dem die erste Spannungslage (11) und die zweite Spannungslage (21) parallel zueinander und durch einen Spalt (5) voneinander beabstandet an einer Grundseite (6) des Kondensators (1) direkt übereinander angeordnet sind,
mit wenigstens einer, zumindest ein Dielektrikum (2) aufweisenden, Kondensatorstruktur (3), die auf einer von der zweiten Spannungslage (21) abgewandten Oberseite (13) der ersten Spannungslage (11) angeordnet ist,
wobei die erste Spannungslage (11) mit einem ersten Anschluss (15) der Kondensatorstruktur (3) elektrisch leitend kontaktiert ist und die zweite Spannungslage (21) mit einem zweiten Anschluss (25) der Kondensatorstruktur (3) mittels eines Kontaktierungselementes (30) elektrisch leitend kontaktiert ist,
wobei die erste Spannungslage (11) zumindest eine Ausnehmung (14) aufweist, durch die das Kontaktierungselement (30) hindurchgeführt ist, wobei außer der wenigsten einen Kondensatorstruktur (3) wenigstens eine weitere Kondensatorstruktur (3) mit einem weiteren ersten Anschluss (15) und einem weiteren zweiten Anschluss (25) vorgesehen ist, die auf der Oberseite (13) der ersten Spannungslage (11) angeordnet ist, wobei der weitere erste Anschluss (15) der weiteren Kondensatorstruktur (3) mit der ersten Spannungslage (11) elektrisch leitend kontaktiert ist und der weitere zweite Anschluss (25) der weiteren Kondensatorstruktur (3) mittels des Kontaktierungselements (30) mit der zweiten Spannungslage (21) elektrisch leitend kontaktiert ist, wobei ein Seitenbereich (31) des Kontaktierungselements (30) zumindest teilweise zwischen der Kondensatorstruktur (3) und der weiteren Kondensatorstruktur (3) angeordnet ist, wobei an dem Seitenbereich (31) wenigstens ein Verbindungselement (35) ausgebildet ist, das durch die Ausnehmung (14) hindurchragt, wobei das Verbindungselement (35) eine geringere Breite (B35) des Verbindungselements (35) als eine Breite (B31) des Seitenbereichs (31) aufweist,
**dadurch gekennzeichnet, dass** an dem Kontaktierungselement (30) ein flächiger Deckbereich (32) ausgebildet ist, wobei die Kondensatorstruktur (3) zwischen dem flächigen Deckbereich (32) und der ersten Spannungslage (11) angeordnet ist,
wobei das Kontaktierungselement (30) einteilig ausgebildet ist und einen Deckbereich 32, den Seitenbereich 31 und das Verbindungselement (35) umfasst.

2. Kondensator nach Anspruch 1, **dadurch gekennzeichnet, dass** der Seitenbereich (31) des Kontaktierungselementes (30) flächig ausgebildet ist.

3. Kondensator nach Anspruch 1 oder 2, **dadurch gekennzeichnet, dass** der Seitenbereich (31) des Kontaktierungselementes (30) im Wesentlichen senkrecht zu der ersten Spannungslage (11) und der zweiten Spannungslage (21) angeordnet ist.

4. Kondensator nach einem der vorhergehenden Ansprüche, **dadurch gekennzeichnet, dass** der flächige Deckbereich (32) des Kontaktierungselements (30) mit der ersten Spannungslage (11) und/oder mit der zweiten Spannungslage (21) überlappt.

5. Kondensator nach einem der vorhergehenden Ansprüche, **dadurch gekennzeichnet, dass** an dem Seitenbereich (31) eine Mehrzahl an Verbindungselementen (35) vorgesehen, wobei jeweils ein Verbindungselement (35) durch jeweils eine Ausnehmung (14) der ersten Spannungslage (11) hindurchragt.

6. Kondensator nach einem der vorhergehenden Ansprüche, **dadurch gekennzeichnet, dass** das wenigstens eine Verbindungselement (35) stiftförmig ausgebildet ist und in wenigstens eine Öffnung (27) in der zweiten Spannungslage (21) eingesteckt ist und/oder mit der zweiten Spannungslage (21) verschweißt ist.

7. Kondensator nach einem der vorhergehenden Ansprüche, **dadurch gekennzeichnet, dass** der Kontaktierungselement (30) einen weiteren Seitenbereich (31) umfasst, wobei der Seitenbereich (31) und der weitere Seitenbereich (31) auf gegenüberliegenden Seiten (8) der Kondensatorstruktur (3) angeordnet sind.

8. Kondensator nach einem der vorhergehenden Ansprüche, **dadurch gekennzeichnet, dass** der Kondensator (1) wenigstens einen ersten Polanschluss (12) zur Kontaktierung der ersten Spannungslage (11) und wenigstens einen zweiten Polanschluss (22) zur Kontaktierung der zweiten Spannungslage (21) umfasst, wobei sich der wenigstens eine erste Polanschluss (12) in seitlicher Fortsetzung der ersten Spannungslage (11) und parallel dazu der wenigstens eine zweite Polanschluss (22) in seitlicher Fortsetzung der zweiten Spannungslage (21) über den Überlappbereich (4) hinaus erstrecken und dergestalt wenigstens ein an der Grundseite (6) des Kondensators (1) abstehendes Kontaktierungsfahnenpaar (7) bilden.

9. Kondensator nach einem der vorhergehenden Ansprüche, **dadurch gekennzeichnet, dass** die erste Spannungslage (11) im Bereich der Ausnehmung (14) das Kontaktierungselement (30) vollständig umlaufend umgibt.

## Claims

1. Capacitor (1), particularly intermediate circuit capacitor for a polyphase system, comprising a first voltage layer (11) and a second voltage layer (21), wherein the first voltage layer (11) and the second voltage layer (21) form a region of overlap (4), in which the first voltage layer (11) and the second voltage layer (21) are arranged parallel to one another and directly one above the other, spaced apart from one another by a gap (5), on a base side (6) of the capacitor (1), comprising at least one capacitor structure (3), which has at least one dielectric (2) and is arranged on an upper side (13) of the first voltage layer (11), said upper side being remote from the second voltage layer (21),
wherein the first voltage layer (11) is in electrically conductive contact with a first terminal (15) of the capacitor structure (3), and the second voltage layer (21) is in electrically conductive contact with a second terminal (25) of the capacitor structure (3) by means of a contact-making element (30),
wherein the first voltage layer (11) has at least one cutout (14), through which the contact-making element (30) has been passed, wherein, apart from the at least one capacitor structure (3), at least one further capacitor structure (3) having a further first terminal (15) and a further second terminal (25) is provided, which at least one further capacitor structure is arranged on the upper side (13) of the first voltage layer (11), wherein the further first terminal (15) of the further capacitor structure (3) is in electrically conductive contact with the first voltage layer (11), and the further second terminal (25) of the further capacitor structure (3) is in electrically conductive contact with the second voltage layer (21) by means of the contact-making element (30), wherein a side region (31) of the contact-making element (30) is arranged at least partially between the capacitor structure (3) and the further capacitor structure (3), wherein at least one connecting element (35) is formed on the side region (31), said connecting element protruding through the cutout (14), wherein the connecting element (35) has a smaller width (B35) of the connecting element (35) than a width (B31) of the side region (31),
**characterized in that** a flat top region (32) is formed on the contact-making element (30), wherein the capacitor structure (3) is arranged between the flat top region (32) and the first voltage layer (11),
wherein the contact-making element (30) is formed integrally and comprises a top region (32), the side region (31) and the connecting element (35).

2. Capacitor according to Claim 1, **characterized in that** the side region (31) of the contact-making element (30) is flat.

3. Capacitor according to Claim 1 or 2, **characterized in that** the side region (31) of the contact-making element (30) is arranged substantially perpendicular to the first voltage layer (11) and the second voltage layer (21).

4. Capacitor according to one of the preceding claims, **characterized in that** the flat top region (32) of the contact-making element (30) overlaps with the first voltage layer (11) and/or with the second voltage layer (21).

5. Capacitor according to one of the preceding claims, **characterized in that** a plurality of connecting elements (35) is provided on the side region (31), wherein in each case one connecting element (35) protrudes through in each case one cutout (14) in the first voltage layer (11).

6. Capacitor according to one of the preceding claims, **characterized in that** the at least one connecting element (35) is in the form of a pin and is plugged into at least one opening (27) in the second voltage layer (21) and/or is welded to the second voltage layer (21).

7. Capacitor according to one of the preceding claims, **characterized in that** the contact-making element (30) comprises a further side region (31), wherein the side region (31) and the further side region (31) are arranged on opposite sides (8) of the capacitor structure (3).

8. Capacitor according to one of the preceding claims, **characterized in that** the capacitor (1) comprises at least one first pole terminal (12) for making contact with the first voltage layer (11) and at least one second pole terminal (22) for making contact with the second voltage layer (21), wherein the at least one first pole terminal (12) extends beyond the region of overlap (4) as a lateral continuation of the first voltage layer (11) and, parallel thereto, the at least one second pole terminal (22) extends beyond the region of overlap (4) as a lateral continuation of the second voltage layer (21), and said at least one first pole terminal and said at least one second pole terminal thus form at least one contact-making pair of lugs (7) protruding on the base side (6) of the capacitor (1).

9. Capacitor according to one of the preceding claims, **characterized in that** the first voltage layer (11) completely surrounds the contact-making element (30) peripherally in the region of the cutout (14).

## Revendications

1. Condensateur (1), en particulier condensateur de circuit intermédiaire pour un système multiphasé comprenant un premier niveau de tension (11) et un deuxième niveau de tension (21),
le premier niveau de tension (11) et le deuxième niveau de tension (21) formant une zone de superposition (4) dans laquelle le premier niveau de tension (11) et le deuxième niveau de tension (21) sont disposés directement l'un au-dessus de l'autre, en parallèle l'un à l'autre et en étant espacés l'un de l'autre par un interstice (5), sur une face de base (6) du condensateur (1),
comprenant au moins une structure de condensateur (3) présentant au moins un diélectrique (2) et qui est disposée sur une face supérieure (13) du premier niveau de tension (11), détournée du deuxième niveau de tension (21),
le premier niveau de tension (11) étant mis en contact électriquement conducteur avec une première borne (15) de la structure de condensateur (3), et le deuxième niveau de tension (21) étant mis en contact électriquement conducteur avec une deuxième borne (25) de la structure de condensateur (3) au moyen d'un élément de mise en contact (30),
le premier niveau de tension (11) présentant au moins un évidement (14) à travers lequel passe l'élément de mise en contact (30), dans lequel, en dehors de ladite au moins une structure de condensateur (3), au moins une structure de condensateur supplémentaire (3) dotée d'une première borne supplémentaire (15) et d'une deuxième borne supplémentaire (25) est prévue et qui est disposée sur la face supérieure (13) du premier niveau de tension (11), dans lequel la première borne supplémentaire (15) de la structure de condensateur supplémentaire (3) est mise en contact électriquement conducteur avec le premier niveau de tension (11), et la deuxième borne supplémentaire (25) de la structure de condensateur supplémentaire (3) est mise en contact électriquement conducteur avec le deuxième niveau de tension (21) au moyen de l'élément de mise en contact (30), une zone latérale (31) de l'élément de mise en contact (30) étant disposée au moins partiellement entre la structure de condensateur (3) et la structure de condensateur supplémentaire (3), dans lequel, sur la zone latérale (31), au moins un élément de liaison (35) est réalisé qui fait saillie à travers l'évidement (14), l'élément de liaison (35) présentant une largeur (B35) de l'élément de liaison (35) inférieure à une largeur (B31) de la zone latérale (31),
**caractérisé en ce que** sur l'élément de mise en contact (30), une zone de recouvrement plane (32) est réalisée, la structure de condensateur (3) étant disposée entre la zone de recouvrement plane (32) et le premier niveau de tension (11), l'élément de mise en contact (30) étant réalisé d'un seul tenant et comprenant une zone de recouvrement (32), la zone latérale (31) et l'élément de liaison (35).

2. Condensateur selon la revendication 1, **caractérisé en ce que** la zone latérale (31) de l'élément de mise en contact (30) est réalisée de manière plane.

3. Condensateur selon la revendication 1 ou 2, **caractérisé en ce que** la zone latérale (31) de l'élément de mise en contact (30) est disposée de manière substantiellement verticale par rapport au premier niveau de tension (11) et au deuxième niveau de tension (21).

4. Condensateur selon l'une quelconque des revendications précédentes, **caractérisé en ce que** la zone de recouvrement plane (32) de l'élément de mise en contact (30) est superposée au premier niveau de tension (11) et/ou au deuxième niveau de tension (21).

5. Condensateur selon l'une quelconque des revendications précédentes, **caractérisé en ce que** sur la zone latérale (31), une pluralité d'éléments de liaison (35) est prévue, respectivement un élément de liaison (35) faisant saillie à travers respectivement un évidement (14) du premier niveau de tension (11).

6. Condensateur selon l'une quelconque des revendications précédentes, **caractérisé en ce que** ledit au moins un élément de liaison (35) est réalisé en forme de broche et est enfiché dans au moins une ouverture (27) dans le deuxième niveau de tension (21) et/ou est soudé au deuxième niveau de tension (21).

7. Condensateur selon l'une quelconque des revendications précédentes, **caractérisé en ce que** l'élément de mise en contact (30) comprend une zone latérale supplémentaire (31), la zone latérale (31) et la zone latérale supplémentaire (31) étant disposées sur des côtés opposés (8) de la structure de condensateur (3).

8. Condensateur selon l'une quelconque des revendications précédentes, **caractérisé en ce que** le condensateur (1) comprend au moins une première borne polaire (12) pour la mise en contact du premier niveau de tension (11) et au moins une deuxième borne polaire (22) pour la mise en contact du deuxième niveau de tension (21), dans lequel ladite au moins une première borne polaire (12) s'étend en prolongement latéral du premier niveau de tension (11), et en parallèle à celle-ci, ladite au moins une deuxième borne polaire (22) s'étend en prolongement latéral du deuxième niveau de tension (21) au-delà de la zone de superposition (4) en formant ainsi au moins une paire de lames de mise en contact (7) faisant saillie sur la face de base (6) du condensateur (1).

9. Condensateur selon l'une quelconque des revendications précédentes, **caractérisé en ce que** le premier niveau de tension (11) entoure l'élément de mise en contact (30) sur toute la périphérie au niveau de l'évidement (14).
